# EUROPEAN PATENT APPLICATION

(11) **EP 2 273 410 A1**
(43) Date of publication of application: **12.01.2011**
(21) Application number: 10165169.3
(22) Date of filing: 08.06.2010
(51) Int. Cl.: G06F 21/00, G11B 20/00

(54) **System and method for software activation through digital media fingerprinting**

(30) Priority: 22.06.2009 US 219060 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system for activating the use of software on a computing device comprises an activation server configured so that in response to a communication link being available between the activation server and the computing device, the activation server (1) receives from the computing device, via the communication link, an activation request including (a) a software identifier identifying the software, (b) a device identifier identifying the computing device, and (c) a digital media identifier identifying a digital media, wherein the software is delivered to a user on the digital media, (2) accesses a database storing known software identifiers, device identifiers, and digital media identifiers, (3) determines an activation instruction through a comparison between the activation request and known software identifiers, device identifiers, and digital media identifiers, and (4) sends the activation instruction to the computing device. A related method for activating the use of software is also disclosed.

## Description

This application claims priority to U.S. Provisional Application No. 61/219,060 which was filed June 22, 2009 and which is fully incorporated herein by reference.

### BACKGROUND

### Field of the Invention

The field of the present invention is systems and methods for software activation.

### Background

Currently, there exist numerous ways to activate software run on various different computing devices. Many software activation programs merely involve providing the user with multi-digit, often in excess of 20 digits, software key and having that key serve as the sole activator for the software. Another option that has been used is by having the software repeatedly verify with an activation server that the software being used has been activated with a valid activation key. Activation keys, however, have created problem for users in that they can be difficult to use for some users, and they can be lost. Yet another option that has been used is to collect information about the computing system, by creation of a unique device identifier, and combining the device identifier with the use of a valid activation key. However, this still leaves the need for an activation key, and the associated problems that activation keys give rise to.

### SUMMARY OF THE INVENTION

The present invention is directed toward a system and method for activating the use of software on a computing device. Through a communication link being available between the computing device and an activation server, the software is activated for use on the computing device. By receiving appropriate data from the computing device, the activation server determines an activation instruction, which is thereafter sent to the computing device.

In a first separate aspect of the present invention, with respect to the system, in response to the communication link being available between the activation server and the computing device, the activation server is configured to: (1) receive from the computing device, via the communication link, an activation request including (a) a software identifier identifying the software, (b) a device identifier identifying the computing device, and (c) a digital media identifier identifying a digital media, wherein the software is delivered to the user on the digital media for installation on the computing device; (2) access a database storing known software identifiers, device identifiers, and digital media identifiers; (3) determine an activation instruction through a comparison between the activation request and known software identifiers, device identifiers, and digital media identifiers; and (4) send the activation instruction to the computing device.

In a second separate aspect of the present invention, building upon the first separate aspect, the digital media identifier is derived from a damage map of the digital media. The damage map may be derived from, at least in part, any one or more of several sources. For example, the damage map may be derived from intentional damage done to the digital media prior to delivery to the user; it may be derived from manufacturing defects; or it may be derived from a combination of both. If the digital media is an optical media, the damage map may be derived from damage to the external surface of the optical media; it may be derived from damage to the data layer of the optical media; it may be derived from read irregularities resulting from interaction between the digital media and a media reader; or it may be derived from a combination of two or more of these sources. The damage map may also be derived from other sources or combinations of sources stemming from the digital media.

In a third separate aspect of the present invention, building upon the first separate aspect, the activation server is configured to apply a probabilistic model to the known digital media identifiers.

In a fourth separate aspect of the present invention, building upon the first separate aspect, a version of the digital media identifier may be stored on the digital media in advance of delivery to the user.

In a fifth separate aspect of the present invention, with respect to the method, following establishment of the communication link between the activation server and the computing device, the activation server receives an activation request from the computing device via the communication link. The activation request includes: (a) a software identifier identifying the software, (b) a device identifier identifying the computing device, and (c) a digital media identifier identifying a digital media, wherein the software is delivered to the user on the digital media for installation on the computing device. A database storing known software identifiers, device identifiers, and digital media identifiers is then accessed, and a comparison is made between the activation request and known software identifiers, device identifiers, and digital media identifiers to determine an activation instruction. That activation instruction is thereafter sent to the computing device.

In a fourth separate aspect of the present invention, any of the foregoing aspects may be employed in combination. Aspects and options listed for the system may be incorporated into the method, just as aspects and options listed for the method may be incorporated into the system.

Accordingly, an improved system and method for activating the use of software on a computing device are disclosed. Advantages of the improvements will appear from the drawings and the description of the preferred embodiment.

### BRIEF DESCRIPTION OF THE DRAWINGS

In the drawings, wherein like reference numerals refer to similar components:

FIG. 1 schematically illustrates a system for activating software usage on a computing device;

FIG. 2 schematically illustrates the components of a device identifier; and

FIG. 3 is a flowchart illustrating a software process for activating the use of software.

### DETAILED DESCRIPTION

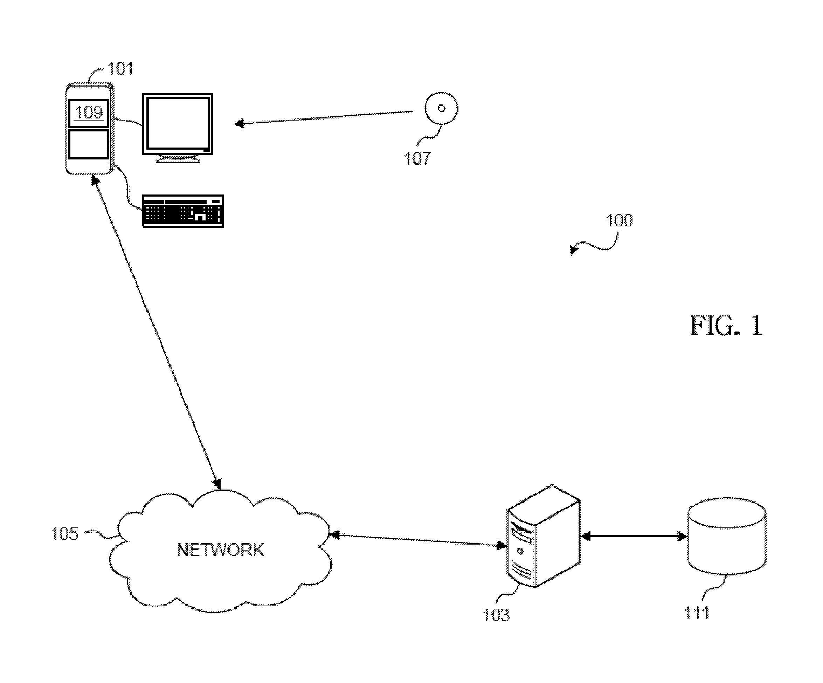

Turning in detail to the drawings, FIG. 1 illustrates a system 100 which is arranged to enable activation of software use on the computing device 101. the computing device 101 submits a request to the activation server 103 via the network 105, and the activation server 103 response with an activation instruction which allows or denies activation of the software. Any additional number of computing devices may connect to the activation server 103 via the network 105, which enables bidirectional communications between any such computing devices and the activation server 103. Hereinafter, any such computing device, including the computing device 101 shown, will be referred to as "computer", with the understanding that they may be any machine or device capable of communication with a computer network, such as a game console, a personal computer, a server computer, a laptop computer, a tablet computer, a personal digital assistant, a mobile phone, a wireless communication device, an onboard vehicle computer, and the like.

The computer 101 communicates over the network 105 with the activation server 103, which is also communicably connected to the network 105, by establishing a communication link with the activation server 103. This single communication link 103 may actually be a series of communication links, such as a first communication link between the network 105 and the computer 101, and a second communication link between the network 105 and the activation server 103. These various communication links may take any form desired. For example, the communication links may be established through intermediaries such as a private communications network or over a public communications network, the Internet being an example of the latter. Alternatively, a private communications network, a public communications network, or any combination of one or more of such networks may form the network 105. Also, the communication links may be established directly or indirectly, permanent or transitory, wired or wireless. In some instances, the communication links may be established as needed. Most typically, the communication link will be established as needed and according to pre-established network protocol via the Internet or other wide area network (WAN).

The activation request is a request to use particular software on the computer 101. The software is delivered to the user, and thus executed and/or installed on the computer, via digital media 107. The digital media 107 may take any form. By way of example, the digital media may be an optical disc such as a DVD or a CD, or it may be in the form of a portable memory device, such as a thumb drive, an SD card (or any of the many variations of commercially available memory cards), or it may even be in the form of a hard disc. Essentially, any media capable of storing and transporting the software to the user suffices. The digital media 107 is read by an appropriate digital media reader 109 that is incorporated into the computer 101. Depending upon the configuration of the computer, its operating system, and the requirements of the software, the software may be executed directly from the digital media 107, or the user may be required to install the software onto the computer 101 prior to execution. Regardless of the manner in which the software is executed, the digital media 107 needs to be present and readable by the digital media reader 109 at least the first time the software is executed on the computer 101. Following this first use, whether the digital media 107 is present for subsequent uses is left up to the desires and needs of the software developer, distributor, and/or owner. Moreover, such subsequent uses may incorporate the activation features and processes described in greater detail below as desired.

The software includes an activation routine that is executed the first time the software is used on the computer 101 to assemble and submit the authentication request through the process described below. Alternatively, if the operating system or computer may have an activation routine already present in the form of an independent application or as part of a library which is accessible to the software. As has already been indicated, the activation routine runs at least when the software is first used on the computer 101. The activation routine may also be run at any desired interval, whether regular or irregular, to maintain the activation and ensure that the use of the software on the computer 101 remains an authorized use.

The activation routine collects information about the computer, software, and digital media, from which it generates the activation request. Once the activation request is assembled, the activation routine initiates or establishes the communication link with the activation server 103 and transmits activation request. As a result, the activation server 103 responds by sending an activation instruction, which includes an activation allowance or an activation denial for use of the software on the computer 101.

The activation request is transferred via a communication link established between the computing device 101 and the activation server 103, and the data contained within the activation request is received by the activation server 103 and maintained within the database 111. As shown, the database 111 resides on the activation server 103, however, in practice the database may reside on any machine, on any recordable medium, or be resident within any memory space to which the activation server 103 is communicably connected, either directly or indirectly.

Following receipt of the activation request over the communication link, the database 111 is accessed to determine whether any of the device identifier or the software identifier, the digital media identifier, or any of the components of these identifiers, are currently stored as part of records within the database. The database 111 stores records of known device identifiers, software identifiers, and digital media identifiers, against which the received activation request is compared. These identifiers are known through either being incorporated in a prior activation request, or because the software developer, distributor, and/or owner adds known software identifiers and digital media identifiers to the database in advance of delivering the software and digital media to the user. If no matching records are found with reference to any of the device identifier, the software identifier, the digital media identifier, or any of the components thereof in the received activation request, then a new record is entered into the database 109 reflecting the received activation request. If one or more of the device identifier, the software identifier, or any of the components thereof in the received activation request are currently included as part of existing records within the database 109, then the currently existing record, or records, as appropriate, are updated to include the received activation request. In either case, the action taken in response to the activation request is also entered into the database 109.

The software identifier includes at least a product identifier, and may also include a software signature. The software identifier may also include other information as desired. The product identifier identifies the title of the software being used on the computing device 101 by title name, product number, product key, or any other appropriate data that indicates the specific software title. The software signature identifies the software being used through creation of a software signature on the computing device. This software signature may then be compared against software signatures on file by the software developer, distributor, and/or owner, to identify the software title being used on the computing device. This additional identification of the software title being used may serve as a cross check on the product identifier. In the event that the software signature received in the activation request does not match any software signature on file, this may be an indicator that the software being used on the computer is an unauthorized copy of the software. In such instances, the activation request may still be added to the database 111, and the activation instruction issued may include a denial of use. The manner in which such situations are handled by the activation process is left up to the desires of the software developer, distributor, and/or owner.

The software signature may be generated in any number of ways, including through the use of commonly used hash functions, checksum functions, software fingerprint functions, and the like. Such functions, along with methods of implementing such functions to produce software signatures (also sometimes referred to as "fingerprints"), are well known to those of skill in the relevant arts, and as such are not discussed in further detail herein.

The digital media identifier serves to uniquely identify the digital media on which the software is delivered to the user. The digital media is examined, identifying and logging any sectors that are damaged and/or require some check against parity, then using fingerprinting techniques, such as those mentioned above with reference to the software signature, to generate the digital media identifier from the assembled log. The software developer, distributor, and/or owner may generate the digital media identifier a first time before the digital media is delivered to the user so that it may be stored within the database 111. Thereafter, when the software generates the digital media identifier, using the same process as the software developer, distributor, and/or owner, and submits the activation request, the digital media identifier included in the activation request may be compared against the digital media identifier in the database. This enables the activation server to ensure that the software use is an authorized use, and that the software has not been installed on more computers than is permitted in the associated license. The user may obtain the license through a retail purchase, a site contract, or through any other commercial or retail source authorized by at least one of the software developer, distributor, and/or owner.

As an alternative, the digital media identifier may be generated once by the software developer, distributor, and/or owner prior to delivery to the user, and that generated digital media identifier may be stored on the digital media to accompany the software at the time of delivery. The stored digital media identifier may be stored in the clear, or it may be encrypted. The latter is preferred because the stored and encrypted digital media identifier may be incorporated into the activation request, because the activation server may decrypt the stored digital media identifier and make a comparison with the digital media identifier generated by the computer. In this circumstance, the database need not have the digital media identifier stored in advance of the activation request, as the encrypted digital media identifier may be considered the known digital media identifier.

In order to compensate for possible damage to the digital media following delivery to the user, the activation server may implement a probabilistic model to analyze the digital media identifier received as part of the activation request and compare it to the known digital media identifiers. Such probabilistic modeling is well known to those of skill in the relevant arts, and as such is not discussed in further detail herein.

Depending upon the circumstances of usage and licensing for the software, the activation request may also include additional information to further identify the software, the computer, the user, or to track other activity of the software beyond those which are expressly described to herein.

The activation routine includes a device identifier subroutine that collects information regarding the computing device by checking a number of parameters which, collectively, are expected to uniquely identify the computing device. The parameters checked may include, for example, hard disk volume name, user name, device name, user password, hard disk initialization date, etc. The collected information includes information that identifies the hardware on which the software is used, such as, for example, CPU number, or unique parameters associated with the firmware in use. The system information may further include system configuration information, such as amount of memory, type of processor, software or operating system serial number, etc. The parameters checked may also include, alternatively or in addition, virtual machine specifications. Examples of virtual machine specifications include, but are not limited to, information relating to virtual processors, virtual BIOS, virtual memory, virtual graphics, virtual IDE drives, virtual SCSI devices, virtual PCI slots, virtual floppy drives, virtual serial (COM) ports, virtual parallel (LPT) ports, virtual keyboard, virtual mouse and drawing tablets, virtual Ethernet card, virtual networking, virtual sound adapter, etc.

Based on the collected information, the subroutine generates a device identifier that uniquely identifies the user's computer. The device identifier may be stored in a hidden directory of the device, and/or it may be generated each time a user event occurs, or at any other desired time. The device identifier, by virtue of the software being used on the computing device or otherwise having access to the computing device's hardware and file system, is generated by a process which operates on data indicative of the computing device's configuration and hardware.

The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The software routine that generates the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured device identifier routine operating or otherwise having had access to the same computing device for which the device identifier was first generated. Conversely, each identifier, again to a very high degree of certainty, can be successfully reproduced by the suitably configured device identifier routine operating or otherwise having access to the same computing device on which the identifier was first generated.

The device identifier routine may operate by performing a system scan to determine a present configuration of the computing device. The routine may then select the machine parameters to be used as input for generating the unique device identifier. Selection of parameters may vary depending on the system configuration. Once the parameters are selected, the routine may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following non-user-configurable parameters: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

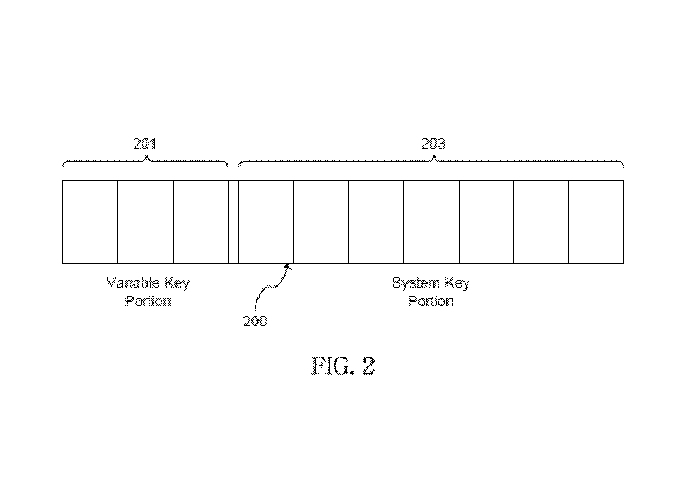

FIG. 2 illustrates an exemplary embodiment of a device identifier 200, which may include two components - namely, a variable key portion 201 and a system key portion 203. The variable key portion 201 may be generated by reference to a variable platform parameter, such as via reference to system time information, although other parameters which are variable may be utilized in other embodiments. The system key portion 203 may include data taken from one or more machine parameters expected to be unique to the computing device on which the software is used, for example, user-configurable parameters such as hard disk volume name, user name, computer name, user password, hard disk initialization date, or some combination of the foregoing. The variable key portion 201 and/or the system key portion 203 may be combined with the IP address and/or other platform parameters of the computing device. The device identifier, or portions thereof, may be encrypted to add an additional layer of specificity and security.

The software may actively monitor itself to determine when an activation request is needed, much as a separate activation application would, and initiates the activation routine at appropriate times. If the software is configured thusly, it preferably sets an activation flag to facilitate the monitoring process. Thereafter, the activation routine, or the separate activation application, can detect and respond appropriately to the flag and any additional data included therewith.

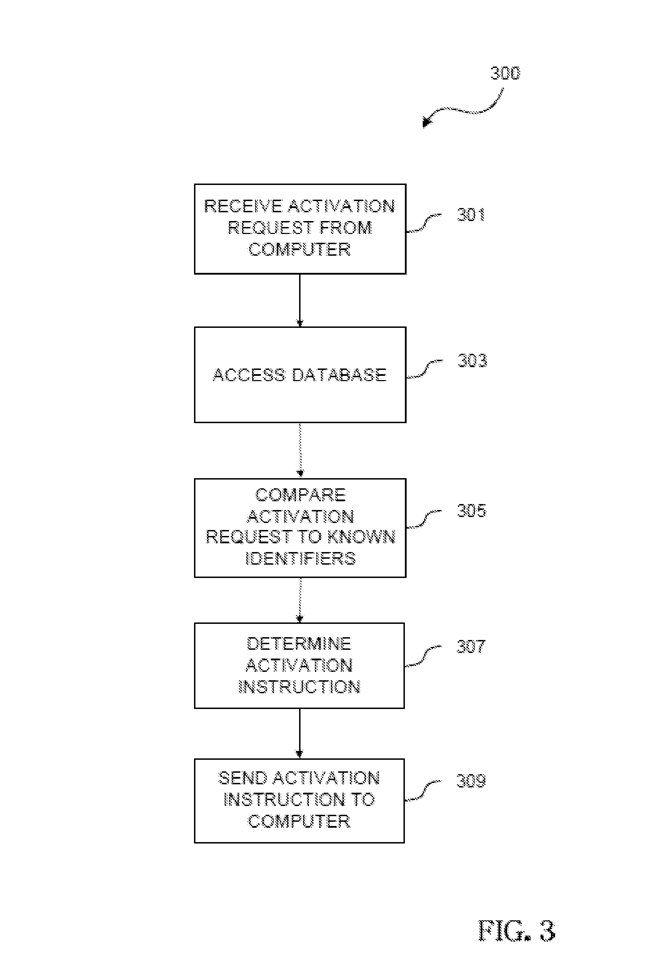

FIG. 3 illustrates the process 300 of the activation server after receiving 301 an activation request from a computer. Following receipt 301 of the activation request, the activation server accesses 303 the database, which contains records of known software identifiers, device identifiers, and digital media identifiers. As is indicated above, this data may be known through being received in prior activation requests, or it may be known through being previously recorded before delivery of the digital media to the user. The server compares 305 the data received as part of the activation request against known device identifiers, software identifiers, and/or digital media identifiers. The known device identifiers are most likely only stored within the database, as the device identifiers generally become known through receipt of the activation requests. The known software identifiers may be known in advance, as the software developer, distributor, and/or owner may create and store within the database software identifiers prior to delivering the digital media to the user. The digital media identifiers may be known by already being stored within the database, either through prior receipt from an activation request or by the software developer, distributor, and/or owner generating and storing within the database the digital media identifiers in advance of delivery to the user. Alternatively, the digital media identifiers may be known because the activation request includes an encrypted copy of a previously generate version of the digital media identifier, as is described above. Regardless of whether a match is found within the database, the server determines 307 the activation instruction and sends 309 the activation instruction to the computer.

The activation instruction includes at least a basic license grant or license denial, but it may also include other information or restrictions on use of the software on the computer. The activation instruction will generally reflect an application of software license usage terms to the particular computer making the activation request. For example, the activation instruction may include an allowance because the digital media identifier is known to be associated with a legitimate sale of the software. As another example, the activation instruction may include a denial because the digital media identifier is already associated with one or more computers within the database, and the number of computers is in excess of the agreed upon license terms associated with the digital media identifier. As will be appreciated by those of skill in the relevant arts, inclusion of the digital media identifier reduces the complexities of licensing and activation imposed upon the user, and increases control the software developer, distributor, and/or owner has over the license terms associated with licensing of the software, even down to controlling uses of software delivered on specifically identified digital media.

Thus, a system and a method for activating software usage on a computing device are disclosed. While embodiments of this invention have been shown and described, it will be apparent to those skilled in the art that many more modifications are possible without departing from the inventive concepts herein. The invention, therefore, is not to be restricted except in the spirit of the following claims.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A system for activating the use of software on a computing device, comprising:
an activation server configured so that, in response to a communication link being available between the activation server and the computing device, the activation server:
receives from the computing device, via the communication link, an activation request including (a) a software identifier identifying the software, (b) a device identifier identifying the computing device, and (c) a digital media identifier identifying a digital media, wherein the software is delivered to a user on the digital media for installation on the computing device;
accesses a database storing known software identifiers, device identifiers, and digital media identifiers;
determines an activation instruction from a comparison between the activation request and known software identifiers, device identifiers, and digital media identifiers; and
sends the activation instruction to the computing device.

2. The system of claim 1, wherein the digital media identifier is derived from a damage map of the digital media.

3. The system of claim 2, wherein the damage map is derived from, at least in part, intentional damage to the digital media prior to delivery to the user.

4. The system of claim 2, wherein the damage map is derived from, at least in part, manufacturing defects in the digital media.

5. The system of claim 2, wherein the digital media comprises optical media and wherein the damage map is derived from, at least in part, damage to an external surface of the optical media.

6. The system of claim 2, wherein the damage map is derived from, at least in part, damage to a data layer of the optical media.

7. The system of claim 2, wherein the damage map is derived from, at least in part, read irregularities resulting from interaction between the digital media and a media reader.

8. The system of claim 1, wherein the comparison includes applying a probabilistic model to the known digital media identifiers.

9. The system of claim 1, wherein the activation instruction includes an activation allowance.

10. The system of claim 1, wherein the activation server is further configured to update the database to reflect the activation request and the resulting activation instruction.

11. A method for activating the use of software on a computing device, the method comprising:
establishing a communication link between an activation server and the computing device;
receiving at the activation server from the computing device, via the communication link, an activation request including (a) a software identifier identifying the software, (b) a device identifier identifying the computing device, and (c) a digital media identifier identifying a digital media, wherein the software is delivered to a user on the digital media for installation on the computing device;
accessing a database storing known software identifiers, device identifiers, and digital media identifiers;
determining an activation instruction from a comparison between the activation request and known software identifiers, device identifiers, and digital media identifiers; and
sending the activation instruction to the computing device.

12. The method of claim 11, wherein the digital media identifier is derived from a damage map of the digital media.

13. The method of claim 12, wherein the damage map is derived from, at least in part, intentional damage to the digital media prior to delivery to the user.

14. The method of claim 12, wherein the damage map is derived from, at least in part, manufacturing defects in the digital media.

15. The method of claim 12, wherein the digital media comprises optical media and wherein the damage map is derived from, at least in part, damage to an external surface of the optical media.
